# EUROPEAN PATENT APPLICATION

(11) **EP 4 742 067 A1**
(43) Date of publication of application: **13.05.2026**
(21) Application number: 24849565.7
(22) Date of filing: 30.07.2024
(51) Int. Cl.: G06F 21/32, G06F 21/45, G06V 40/18, G06V 40/16, G06F 1/16, G06F 3/01, G02B 27/01

(54) **ELECTRONIC DEVICE FOR ENHANCING SECURITY BY USING FEATURE OF EYEBALL IMAGE AND METHOD FOR CONTROLLING SAME**

(30) Priority: 03.08.2023 KR 20230101551; 22.09.2023 KR 20230127355
(71) Applicant: Samsung Electronics Co., Ltd., Suwon-si, Gyeonggi-do 16677 (KR)
(72) Inventor: KANG, Jinmo, Suwon-si Gyeonggi-do 16677 (KR); KOO, Bonkon, Suwon-si Gyeonggi-do 16677 (KR); KIM, Sungoh, Suwon-si Gyeonggi-do 16677 (KR); RYU, Jisu, Suwon-si Gyeonggi-do 16677 (KR); PARK, Sungkweon, Suwon-si Gyeonggi-do 16677 (KR); YEOM, Donghyun, Suwon-si Gyeonggi-do 16677 (KR)
(74) Representative: HGF
(86) International application number: PCT/KR2024/011124
(87) International publication number: WO 2025/028998

(57) **Abstract**

Disclosed are an electronic device for enhancing security by using features of an eyeball image, and a method for controlling same. An electronic device according to an embodiment of the present document comprises: at least one camera; and at least one processor. The at least one processor may be configured to: acquire a user's eyeball image through the at least one camera; and determine, on the basis of the acquired eyeball image, whether the user wearing the electronic device is a legitimate user. Whether the user wearing the electronic device is a legitimate user may be determined on the basis of at least one among position information of a glint for the eyeball image, the elliptical shape of a pupil, the elliptical shape of an iris, and whether glasses are worn.

## Description

### [Technical Field]

The disclosure relates to an electronic device for enhancing security by using the characteristics of an eyeball image and a method for controlling same.

### [Background Art]

Various services and additional functions provided through an electronic device, for example, a wearable electronic device such as smart glasses (e.g., glasses-type augmented reality device), are gradually increasing. To increase the utility value of such electronic devices and satisfy the diverse needs of users, communication service providers or electronic device manufacturers are developing electronic devices in a competitive manner to provide various functions and differentiate themselves from other companies. Accordingly, various functions provided through electronic devices are becoming increasingly advanced.

### [Detailed Description of the Invention]

### [Technical Problem]

An eye tracking algorithm may include a feature extraction operation for identifying a pupil position, an infrared (IR) LED reflection position. and the like in a captured image, a 3D eye model estimation operation for predicting the parameters of a 3D eye model based on the extracted eye features, and a user calibration operation for correcting the gaze. In addition, an iris recognition algorithm may include a segmentation operation for segmenting the iris from a captured image, a normalization operation for normalizing the segmented iris image, and a feature extraction operation for extracting iris features. The electronic device may perform the personal authentication based on whether the extracted feature points match a registered template. According to the prior art, when applying an iris recognition algorithm, false authentication may be possible by using the output image of an eye tracking camera.

According to an embodiment of the disclosure, the electronic device may determine whether the user wearing the electronic device is a legitimate user (e.g., whether a user who has previously used the electronic device is actually wearing the electronic device), based on at least one of the position information of a glint in an eyeball image, the elliptical shape of the pupil, the elliptical shape of the iris, or the wearing state of glasses, thereby providing an electronic device with enhanced security.

### [Technical Solution]

An electronic device according to an embodiment of the disclosure may include at least one camera and at least one processor, and the at least one processor may be configured to acquire an eyeball image of a user through the at least one camera, and determine whether a user wearing the electronic device is a legitimate user, based on the acquired eyeball image, and whether the user is a legitimate user may be determined based on at least one of position information of a glint in the eyeball image, an elliptical shape of the pupil, an elliptical shape of the iris, or whether glasses are being worn by the user.

A method for controlling an electronic device according to an embodiment of the disclosure may include the operations of: acquiring a user's eyeball image through at least one camera; and determining whether a user wearing the electronic device is a legitimate user, based on the acquired eyeball image. Whether the user is a legitimate user may be determined based on at least one of position information of a glint in the eyeball image, the elliptical shape of the pupil, the elliptical shape of the iris, or whether glasses are being worn by the user.

### [Advantageous Effects]

According to an embodiment of the disclosure, an electronic device may determine whether a user wearing the electronic device is a legitimate user (e.g., whether a user who has previously used the electronic device is actually wearing the electronic device), based on at least one of the position information of a glint in the eyeball image, the elliptical shape of the pupil, the elliptical shape of the iris, or whether glasses are worn by the user, thereby providing an electronic device having enhanced security.

### [Brief Description of Drawings]

FIG. 1 is a block diagram illustrating an electronic device in a network environment according to various embodiments.
FIG. 2A is a perspective view of a wearable device (e.g., an electronic device) according to an embodiment of the disclosure.
FIG. 2B is a perspective view illustrating an internal configuration of a wearable device (e.g., an electronic device) according to an embodiment of the disclosure.
FIG. 2C is an exploded perspective view of a wearable device (e.g., an electronic device) according to an embodiment of the disclosure.
FIG. 3 illustrates an eye tracking camera structure of a wearable device according to an embodiment of the disclosure.
FIG. 4 is an exemplary view illustrating a function or operation of determining whether a user wearing an electronic device is a legitimate user, based on various parameters, according to an embodiment of the disclosure.
FIG. 5A is an exemplary view illustrating an eyeball image according to an embodiment of the disclosure.
FIG. 5B is an exemplary view illustrating glint identifications (IDs) according to an embodiment of the disclosure.
FIG. 5C is an exemplary view illustrating an eyeball image acquired in case that a user is wearing glasses, according to an embodiment of the disclosure.
FIG. 6 is an exemplary view illustrating a function or operation of changing the brightness of a first virtual object 710 and/or the brightness of an application execution screen in order for an electronic device to determine whether a user wearing the electronic device is a false user, according to an embodiment of the disclosure.
FIG. 7 is an exemplary view illustrating, from the user interface perspective, the function or operation described in FIG. 6.
FIG. 8 is an exemplary view illustrating a function or operation of changing a display position of a first virtual object in order for an electronic device to determine whether a user wearing the electronic device is a false user, according to an embodiment of the disclosure.
FIG. 9 is an exemplary view illustrating, from the user interface perspective, the function or operation described in FIG. 8.
FIG. 10 is an exemplary view illustrating a function or operation of changing the brightness and position of a first virtual object in order for an electronic device to determine whether a user wearing the electronic device is a false user, according to an embodiment of the disclosure.
FIG. 11 is an exemplary view illustrating, from the user interface perspective, the function or operation described in FIG. 10.
FIG. 12 is an exemplary view illustrating a function or operation of determining whether a user performing authentication is a false user, based on user history information, in an electronic device according to an embodiment of the disclosure.
FIGS. 13A and 13B are exemplary views illustrating another type of electronic device according to the disclosure.

### [Mode for Carrying out the Invention]

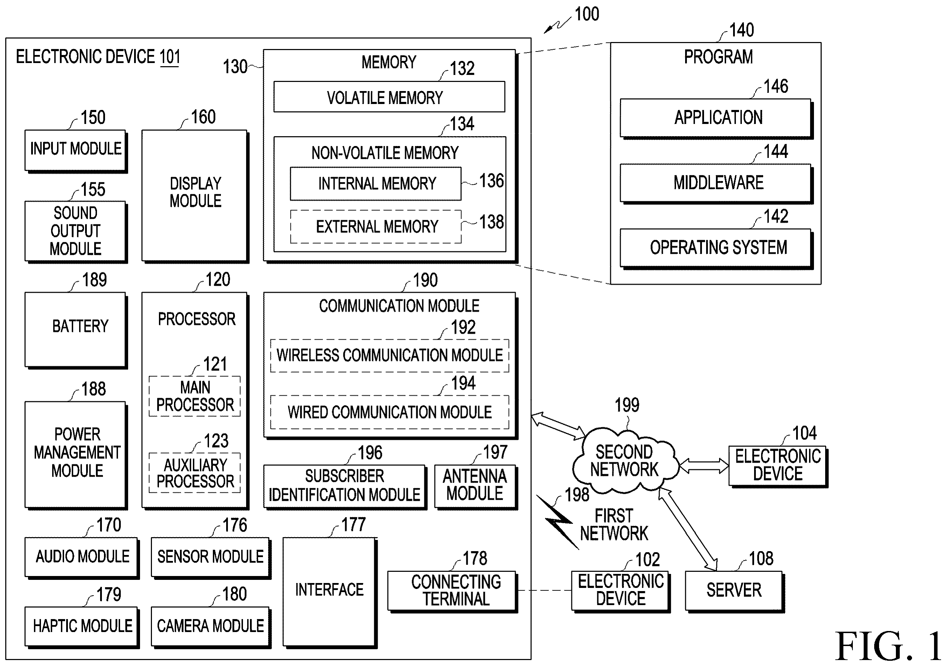

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

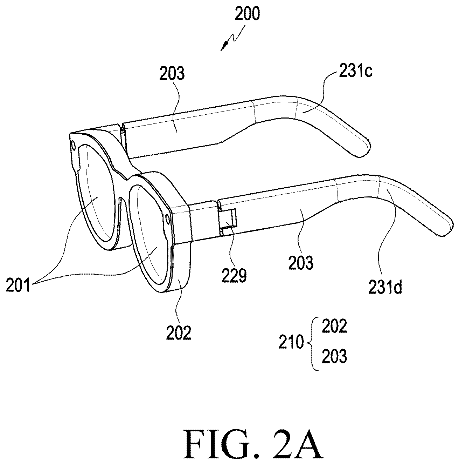

FIG. 2A is a perspective view of a wearable device 200 according to various embodiments of the disclosure.

Referring to FIG. 2A, the wearable device 200 is a glasses-type electronic device, and user may visually recognize surrounding objects or environments while wearing the wearable device 200. For example, the wearable device 200 may be a head mounting device (HMD) or smart glasses capable of directly providing an image in front of the user's eyes. The configuration of the wearable device 200 in FIG. 2A may be entirely or partially the same as the configuration of the electronic device 101 in FIG. 1.

According to various embodiments, the wearable device 200 may include a housing 210 that forms the exterior of the wearable device 200. The housing 210 may provide a space in which components of the wearable device 200 may be disposed. For example, the housing 210 may include a lens frame 202 and at least one wearing member 203.

According to various embodiments, the wearable device 200 may include a display member 201 capable of providing visual information to a user. For example, the display member 201 may include a module on which a lens, a display, a waveguide, and/or a touch circuit is mounted. According to an embodiment, the display member 201 may be formed to be transparent or translucent. According to an embodiment, the display member 201 may include glass made of a translucent material or a window member whose light transmittance may be adjusted by adjusting the tint concentration. According to an embodiment, the wearable device may include a pair of display members 201, and the pair of display members may be arranged to correspond to the user's left and right eyes, respectively, while the wearable device 200 is worn on the user's body.

According to various embodiments, the lens frame 202 may accommodate at least a portion of the display member 201. For example, the lens frame 202 may at least partially surround an edge of the display member 201. According to an embodiment, the lens frame 202 may position at least one of the display members 201 to correspond to the user's eye. According to an embodiment, the lens frame 202 may be a rim of a general eyeglass structure. According to an embodiment, the lens frame 202 may include at least one closed curve surrounding the display member 201.

According to various embodiments, the wearing member 203 may extend from the lens frame 202. For example, the wearing member 203 may extend from an end of the lens frame 202 and, together with the lens frame 202, may be supported or positioned on the user's body (e.g., the ear). According to an embodiment, the wearing member 203 may be rotatably coupled to the lens frame 202 through a hinge structure 229. According to an embodiment, the wearing member 203 may include an inner side surface 231c configured to face the user's body and an outer side surface 231d opposite to the inner side surface.

According to various embodiments, the wearable device 200 may include a hinge structure 229 configured to allow the wearing member 203 to be folded relative to the lens frame 202. The hinge structure 229 may be disposed between the lens frame 202 and the wearing member 203. In a state where the wearable device 200 is not worn, the user may fold the wearing member 203 such that a portion thereof overlaps with the lens frame 202 for carrying or storing.

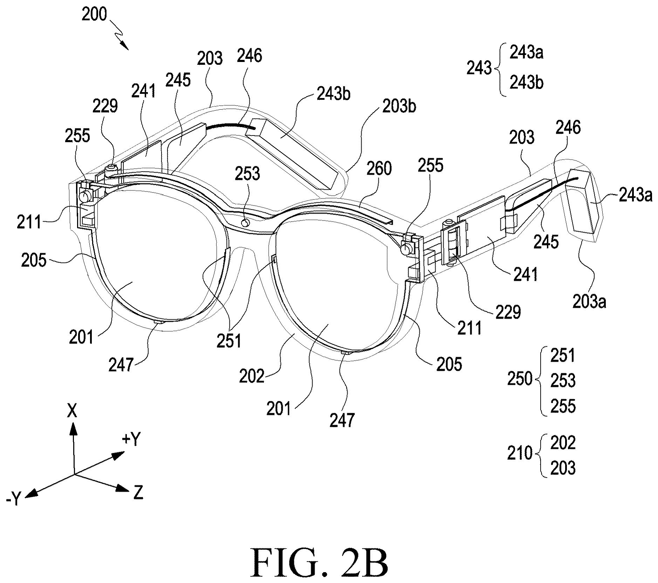

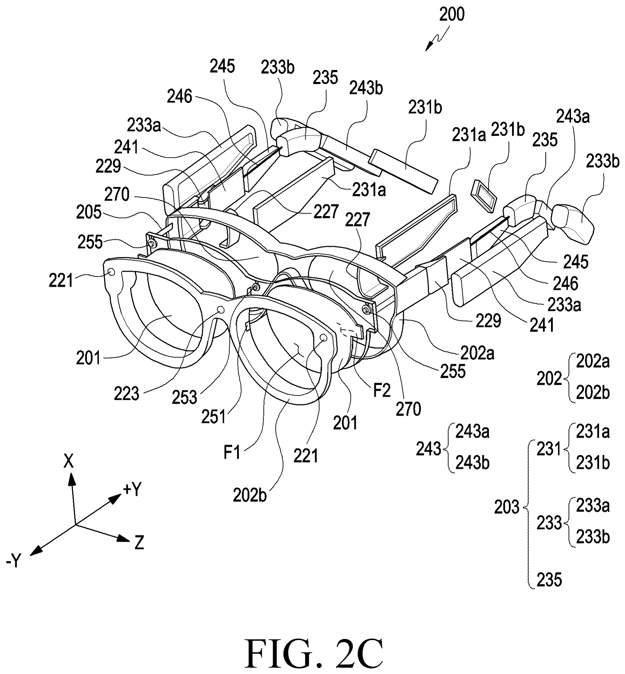

FIG. 2B is a perspective view illustrating an internal configuration of a wearable device according to an embodiment of the disclosure. FIG. 2C is an exploded perspective view of a wearable device according to an embodiment of the disclosure.

Referring to FIGS. 2B and 2C, the wearable device 200 may include components (e.g., at least one circuit board 241 (e.g., a printed circuit board (PCB), a printed board assembly (PBA), a flexible PCB (FPCB), or a rigid-flexible PCB (RFPCB)), at least one battery 243, at least one speaker module 245, at least one power transmission structure 246, and/or a camera module 250) accommodated in the housing 210. The configuration of the housing 210 in FIG. 2B may be entirely or partially the same as the configuration of the display member 201, the lens frame 202, the wearing member 203, and the hinge structure 229 in FIG. 2A.

According to various embodiments, the wearable device 200 may acquire and/or recognize a visual image of an object or environment in a direction (e.g., -Y direction) that the user is looking at or the wearable device 200 is oriented to, by using the camera module 250 (e.g., the camera module 180 in FIG. 1), and may receive information about the object or environment from an external electronic device (e.g., the electronic devices 102, 104, or the server 108 in FIG. 1) through a network (e.g., the first network 198 or the second network 199 in FIG. 1). In an embodiment, the wearable device 200 may provide the provided information about the object or environment to the user in an auditory or visual form. The wearable device 200 may provide the user with the provided information about the object or environment in a visual form through the display member 201 by using a display module (e.g., the display module 160 in FIG. 1). For example, by implementing information on an object or environment in a visual form and combining the information with an actual image of the user's surrounding environment, the wearable device 200 may implement an augmented reality.

According to various embodiments, the display member 201 may include a first surface F1 facing in a direction (e.g., the -Y direction) in which external light is incident and a second surface F2 facing in a direction (e.g., the +Y direction) opposite to the first surface F1. While the user is wearing the wearable device 200, at least a part of the light or image incident through the first surface F1 may pass through the second surface F2 of the display member 201 disposed to face the user's left and/or right eye and may be incident on the user's left and/or right eye.

According to various embodiments, the lens frame 202 may include at least two frames. For example, the lens frame 202 may include a first frame 202a and a second frame 202b. According to an embodiment, when the wearable device 200 is worn by the user, the first frame 202a may be a frame facing the user's face, and the second frame 202b may be a portion of the lens frame 202 that is spaced apart from the first frame 202a in the direction of the user's gaze (e.g., the -Y direction).

According to various embodiments, an optical output module 211 may provide an image and/or video to the user. For example, the optical output module 211 may include a display panel (not shown) capable of outputting an image, and a lens (not shown) corresponding to the user's eye and configured to guide the image to the display member 201. For example, the user may obtain an image output from the display panel of the optical output module 211 through the lens of the optical output module 211. According to various embodiments, the optical output module 211 may include a device configured to display various types of information. For example, the optical output module 211 may include at least one of a liquid crystal display (LCD), a digital mirror device (DMD), a liquid crystal on silicon (LCoS), an organic light-emitting diode (OLED), or a micro light-emitting diode (micro LED). According to an embodiment, in case that the optical output module 211 and/or the display member 201 includes one of a liquid crystal display (LCD), a digital micromirror device (DMD), or a liquid crystal on silicon (LCoS), the wearable device 200 may include a light source that emits light to a display area of the optical output module 211 and/or the display member 201. According to an embodiment, when the optical output module 211 and/or the display member 201 includes one of an OLED or a micro LED, the wearable device 200 may provide a virtual image to the user without including a separate light source.

According to various embodiments, at least a portion of the optical output module 211 may be disposed inside the housing 210. For example, optical output modules 211 may be arranged on the wearing member 203 or the lens frame 202 to correspond to the user's right and left eyes, respectively. According to an embodiment, the optical output module 211 may be connected to the display member 201 and may provide an image to the user through the display member 201.

According to various embodiments, the circuit board 241 may include components for driving the wearable device 200. For example, the circuit board 241 may include at least one integrated circuit chip, and at least one of the processor 120, the memory 130, the power management module 188, or the communication module 190 in FIG. 1 may be provided in the integrated circuit chip. According to an embodiment, the circuit board 241 may be disposed inside the wearing member 203 of the housing 210. According to an embodiment, the circuit board 241 may be electrically connected to the battery 243 through the power transmission structure 246. According to an embodiment, the circuit board 241 may be connected to a flexible printed circuit board 205 and may transfer an electrical signal to the electronic components (e.g., the optical output module 211, the camera module 250, and a light-emitting unit) of the electronic device through the flexible printed circuit board 205. According to an embodiment, the circuit board 241 may be a circuit board including an interposer.

According to various embodiments, the flexible printed circuit board 205 may extend from the circuit board 241 across the hinge structure 229 into the interior of the lens frame 202 and may be disposed around at least a portion of the display member 201 inside the lens frame 202.

According to various embodiments, the battery 243 (e.g., the battery 189 in FIG. 1) may be electrically connected to components (e.g., the optical output module 211, the circuit board 241, the speaker module 245, the microphone module 247, and/or the camera module 250) of the wearable device 200 and may supply power to the components of the wearable device 200.

According to various embodiments, at least a portion of the battery 243 may be disposed on the wearing member 203. According to an embodiment, the battery 243 may be disposed at the end portions 203a and 203b of the wearing member 203. For example, the battery 243 may include a first battery 243a disposed at a first end 203a of the wearing member 203 and a second battery 243b disposed at a second end 203b of the wearing member 203.

According to various embodiments, the speaker module 245 (e.g., the audio module 170 or the sound output module 155 in FIG. 1) may convert an electrical signal into a sound. At least a portion of the speaker module 245 may be disposed within the wearing member 203 of the housing 210. According to an embodiment, the speaker module 245 may be disposed in the wearing member 203 to correspond to the user's ear. For example, the speaker module 245 may be disposed between the circuit board 241 and the battery 243.

According to various embodiments, the power transmission structure 246 may transmit power from the battery 243 to the electronic components (e.g., the optical output module 211) of the wearable device 200. For example, the power transmission structure 246 may be electrically connected to the battery 243 and/or the circuit board 241, and the circuit board 241 may transmit power received through the power transmission structure 246 to the optical output module 211. According to an embodiment, the power transmission structure 246 may extend through the speaker module 245 and be connected to the circuit board 241. For example, when the wearable device 200 is viewed from a lateral side (e.g., in the Z-axis direction), the power transmission structure 246 may at least partially overlap with the speaker module 245.

According to various embodiments, the power transmission structure 246 may have a configuration capable of transmitting power. For example, the power transmission structure 246 may include a flexible printed circuit board or a wire. For example, the wire may include a plurality of cables (not shown). In various embodiments, the shape of the power transmission structure 246 may be variously transformed depending on the number and/or type of cables.

According to various embodiments, the microphone module 247 (e.g., the input module 150 and/or the audio module 170 in FIG. 1) may convert sound into an electrical signal. According to an embodiment, the microphone module 247 may be disposed in at least a portion of the lens frame 202. For example, at least one microphone module 247 may be disposed at a lower end (e.g., in a direction facing the -X axis) and/or an upper end (e.g., in a direction facing the X axis) of the wearable device 200. According to various embodiments, the wearable device 200 may recognize a user's voice more clearly by using the voice information (e.g., sound) acquired from at least one microphone module 247. For example, the wearable device 200 may distinguish the voice information from the surrounding noise, based on the acquired voice information and/or additional information (e.g., low-frequency vibrations of the user's skin and bones). For example, the wearable device 200 may clearly recognize the user's voice and perform a function (e.g., noise cancellation) of reducing surrounding noise. The microphone modules 247 according to various embodiments of the disclosure may include a plurality of microphone modules 247 to perform beamforming. The microphone module 247 according to various embodiments of the disclosure may include an omnidirectional or directional microphone.

According to various embodiments, the camera module 250 may capture still images and/or moving images. The camera module 250 may include at least one of a lens, at least one image sensor, an image signal processor, or a flash. According to an embodiment, the camera module 250 may be disposed inside the lens frame 202 and may be disposed around the display member 201.

According to various embodiments, the camera module 250 may include at least one first camera module 251. According to an embodiment, the first camera module 251 may capture the trajectory of the eye (e.g., a pupil) or a gaze of the user. For example, the first camera module 251 may capture a reflection pattern of light emitted by the light-emitting unit to the user's eye. For example, the light-emitting unit may emit light in the infrared band for tracking the trajectory of a gaze by using the first camera module 251. For example, the light-emitting unit may include an IR LED. According to an embodiment, the processor (e.g., the processor 120 in FIG. 1) may adjust the position of the virtual image to be projected onto the display member 201 to correspond to the direction in which the user's eyeball is gazing. According to an embodiment, the first camera module 251 may include a global shutter (GS) camera and may track the trajectory of the eye or gaze of the user by using multiple first camera modules 251 of the same specification and performance.

According to various embodiments, the first camera module 251 may periodically or aperiodically transmit information (e.g., trajectory information) related to the trajectory of the eye or gaze of the user to a processor (e.g., the processor 120 in FIG. 1). According to an embodiment, when the first camera module 251 detects that the user's gaze has changed (e.g., when the eyes have moved by a predetermined amount or more while the head is not moving) based on the trajectory information, the first camera module 251 may transmit the trajectory information to the processor.

According to various embodiments, the camera module 250 may include a second camera module 253. According to an embodiment, the second camera module 253 may capture an external image. According to an embodiment, the second camera module 253 may be a global shutter (GS) camera or a rolling shutter (RS) camera. According to an embodiment, the second camera module 253 may capture an external image through a second optical hole 223 formed in the second frame 202b. For example, the second camera module 253 may include a high-resolution color camera and may be a high-resolution (HR) or photo video (PV) camera. In addition, the second camera module 253 may provide an auto focus (AF) function and an optical image stabilizer (OIS) function.

According to various embodiments, the wearable device 200 may include a flash (not shown) disposed adjacent to the second camera module 253. For example, the flash (not shown) may provide light for increasing the brightness (e.g., illumination) of the surroundings of the wearable device 200 when the second camera module 253 acquires an external image, thereby reducing the difficulty of image acquisition caused by dark environments, the mixing of various light sources, and/or light reflections.

According to various embodiments, the camera module 250 may include at least one third camera module 255. According to an embodiment, the third camera module 255 may capture the user's movement through a first optical hole 221 formed in the lens frame 202. For example, the third camera module 255 may capture a user's gesture (e.g., a hand motion). The third camera module 255 and/or the first optical hole 221 may be arranged on opposite side ends of the lens frame 202 (e.g., the second frame 202b), for example, on opposite end portions of the lens frame 202 (e.g., the second frame 202b) in the X direction. According to an embodiment, the third camera module 255 may be a global shutter (GS) camera. For example, the third camera module 255 may be a camera that supports three degrees of freedom (3DoF) or six degrees of freedom (6DoF) and may provide 360-degree space (e.g., omnidirectional), position recognition, and/or movement recognition. According to an embodiment, the third camera module 255 may perform a simultaneous localization and mapping (SLAM) function and a user motion recognition function by using multiple global shutter cameras having the same standard and performance as a stereo camera. According to an embodiment, the third camera module 255 may include an infrared (IR) camera (e.g., a time-of-flight (TOF) camera or a structured light camera). For example, the IR camera may be operated as at least a part of the sensor module (e.g., the sensor module 176 in FIG. 1) for detecting a distance to a subject.

According to an embodiment, at least one of the first camera module 251 or the third camera module 255 may be replaced with the sensor module (e.g., the sensor module 176 in FIG. 1) (e.g., a Lidar sensor). For example, the sensor module may include at least one of a vertical cavity surface emitting laser (VCSEL), an infrared sensor, and/or a photodiode. For example, the photodiode may include a positive intrinsic negative (PIN) photodiode or an avalanche photodiode (APD). The photodiode may also be referred to as a photo detector or a photo sensor.

According to an embodiment, at least one of the first camera module 251, the second camera module 253, or the third camera module 255 may include a plurality of camera modules (not shown). For example, the second camera module 253 may include multiple lenses (e.g., wide-angle and telephoto lenses) and image sensors and may be disposed on one surface (e.g., a surface facing in the -Y direction) of the wearable device 200. For example, the wearable device 200 may include a plurality of camera modules each having a different attribute (e.g., a field of view) or function, and may control the camera modules to change the field of view based on a user's selection and/or trajectory information. For example, at least one of the multiple camera modules may be a wide-angle camera, and at least another one may be a telephoto camera.

According to various embodiments, the processor (e.g., the processor 120 in FIG. 1) may determine the movement of the wearable device 200 and/or the user's movement by using information about the wearable device 200 acquired by using at least one of a gesture sensor, a gyro sensor, or an acceleration sensor of the sensor module (e.g., the sensor module 176 in FIG. 1) and the user's movement (e.g., the user's body approaching the wearable device 200) acquired by using the second camera module 253. According to an embodiment, the wearable device 200 may include a magnetic (geomagnetic) sensor capable of measuring direction using a magnetic field and magnetic force lines, and/or a Hall sensor capable of obtaining motion information (e.g., a moving direction or a moving distance) using the intensity of the magnetic field, in addition to the sensors described above. For example, the processor may determine the movement of the wearable device 200 and/or the user's movement based on information acquired from a geomagnetic (magnetic) sensor and/or a Hall sensor.

According to various embodiments (not shown), the wearable device 200 may perform an input function (e.g., a touch and/or pressure detection function) capable of interacting with the user. For example, a component (e.g., a touch sensor and/or a pressure sensor) configured to perform a touch and/or pressure detection function may be disposed on at least a portion of the wearing member 203. The wearable device 200 may control the virtual image output through the display member 201, based on information acquired through the components. For example, a sensor related to a touch and/or pressure detection function may be configured in various ways, such as a resistive type, a capacitive type, an electro-magnetic (EM) type, or an optical type. According to an embodiment, the component configured to perform the touch and/or pressure detection function may be entirely or partially the same as the configuration of the input module 150 in FIG. 1.

According to various embodiments, the wearable device 200 may include a reinforcement member 260 disposed in the inner space of the lens frame 202 and formed to have a rigidity higher than the rigidity of the lens frame 202.

According to various embodiments, the wearable device 200 may include a lens structure 270. The lens structure 270 may refract at least a portion of light. For example, the lens structure 270 may be a prescription lens having a refractive power. According to an embodiment, the lens structure 270 may be disposed at the rear (e.g., the +Y direction) of a second window member of the display member 201. For example, the lens structure 270 may be positioned between the display member 201 and the user's eye. For example, the lens structure 270 may face the display member.

According to various embodiments, the housing 210 may include a hinge cover 227 capable of concealing a portion of the hinge structure 229. Another part of the hinge structure 229 may be accommodated or concealed between an inner case 231 and an outer case 233, which will be described below.

According to various embodiments, the wearing member 203 may include an inner case 231 and an outer case 233. The inner case 231 may be, for example, a case configured to face the user's body or to be in direct contact with the user's body and may be made of a material having low thermal conductivity, for example, a synthetic resin. According to an embodiment, the inner case 231 may include an inner side surface (e.g., the inner side surface 231c in FIG. 2A) that faces the user's body. The outer case 233 may include, for example, a material (e.g., a metallic material) capable of at least partially transferring heat, and may be coupled to face the inner case 231. According to an embodiment, the outer case 233 may include an outer side surface (e.g., the outer side surface 231d in FIG. 2A) opposite to the inner side surface 231c. In an embodiment, at least one of the circuit board 241 or the speaker module 245 may be accommodated in a space separated from the battery 243 inside the wearing member 203. In the embodiment shown, the inner case 231 may include a first case 231a including a circuit board 241 or a speaker module 245 and a second case 231b accommodating a battery 243, and the outer case 233 may include a third case 233a coupled to face the first case 231a and a fourth case 233b coupled to face the second case 231b. For example, the first case 231a and the third case 233a may be combined (hereinafter, a "first case portion 231a, 233a") to accommodate the circuit board 241 and/or the speaker module 245, and the second case 231b and the fourth case 233b may be combined (hereinafter, a "second case portion 231b, 233b") to accommodate the battery 243.

According to various embodiments, the first case portion 231a, 233a may be rotatably coupled to the lens frame 202 through the hinge structure 229, and the second case portion 231b, 233b may be connected or mounted to an end of the first case portion 231a, 233a through a connection member 235. In an embodiment, a portion of the connection member 235 which is in contact with the user's body may be made of a material having low thermal conductivity, for example, an elastic material such as silicone or polyurethane, and a portion which is not in contact with the user's body may be made of a material having high thermal conductivity (e.g., a metallic material). For example, when heat is generated in the circuit board 241 or the battery 243, the connection member 235 may block the heat from being transferred to the portion which is in contact with the user's body, and may disperse or release the heat through the portion which is not in contact with the user's body. According to an embodiment, the portion of the connection member 235 configured to come into contact with the user's body may be interpreted as a portion of the inner case 231, and the portion of the connection member 235 that does not come into contact with the user's body may be interpreted as a portion of the outer case 233. According to an embodiment (not shown), the first case 231a and the second case 231b may be integrally configured without the connection member 235, and the third case 233a and the fourth case 233b may also be integrally configured without the connection member 235. According to various embodiments, the communication module 190 may further include other components (e.g., the antenna module 197 in FIG. 1) in addition to the components shown, and may receive information about an object or environment from an external electronic device (e.g., the electronic devices 102 and 104 or the server 108 in FIG. 1) through a network (e.g., the first network 198 or the second network 199 in FIG. 1) by using the communication module 190.

Although only the wearable device 200 is shown and described in FIGS. 2A to 2C, the disclosure is not limited thereto, and some components of the wearable device 200 shown in FIGS. 2A to 2C may also be included in other electronic devices, such as a smartphone or a tablet PC.

The wearable device 200 according to various embodiments of the disclosure may identify, through a proximity sensor included in the wearable device 200, whether a user 210 is wearing the wearable device 100. Alternatively, the wearable device 200 according to various embodiments of the disclosure may determine whether the wearable device 200 is worn by the user 210, based on whether the frame of the wearable device 200 is unfolded (e.g., in an unfolded state) and whether the user 210 is detected in proximity to the wearable device 200 while the frame of the wearable device 200 is unfolded, through an angle sensor provided in the hinge of the wearable device 200.

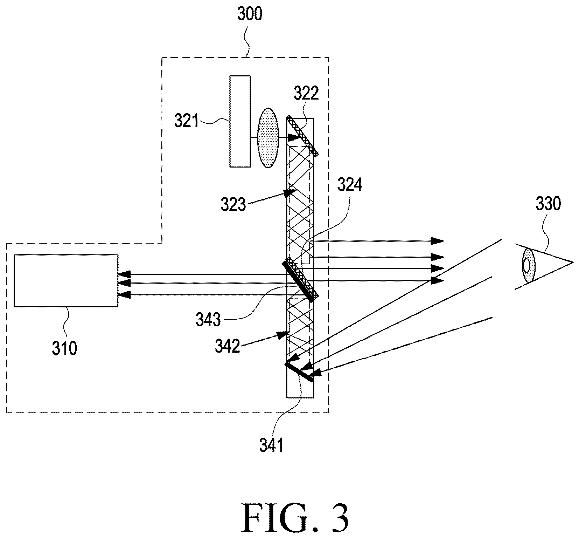

FIG. 3 illustrates an eye tracking camera structure of a wearable device according to various embodiments. Referring to FIG. 3, the wearable device 300 (e.g., a glasses-type device) may include an eye tracking (ET) camera 310, a display 321, an input optical member 322, a first waveguide 323, an output optical member 324, a first splitter 341, a second waveguide 342, and a second splitter 343.

According to various embodiments, the user's pupil 330 may be imaged onto the eye tracking (ET) camera 310 through the first splitter 341 (e.g., an eye tracking splitter), the second waveguide 342, and the second splitter 343. The ET camera 310 may track the user's gaze by detecting the pupil 330 from the captured image and identifying the movement of the detected pupil 330.

According to various embodiments, an image output through the display 321 may be reflected through the input optical member 322 and the first waveguide 323, and then displayed through the output optical member 324. The wearable device 300 may output an image through the display 321 while identifying the movement of the user's pupil 330 to track the user's gaze.

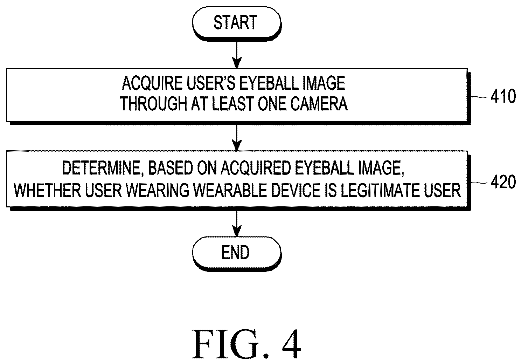

FIG. 4 is an exemplary view illustrating a function or operation of determining whether a user wearing an electronic device (e.g., the electronic device 101 in FIG. 1, the wearable device 200 in FIGS. 2A, 2B, and 2C, or the wearable device 300 in FIG. 3) is a legitimate user, based on various parameters, according to an embodiment of the disclosure.

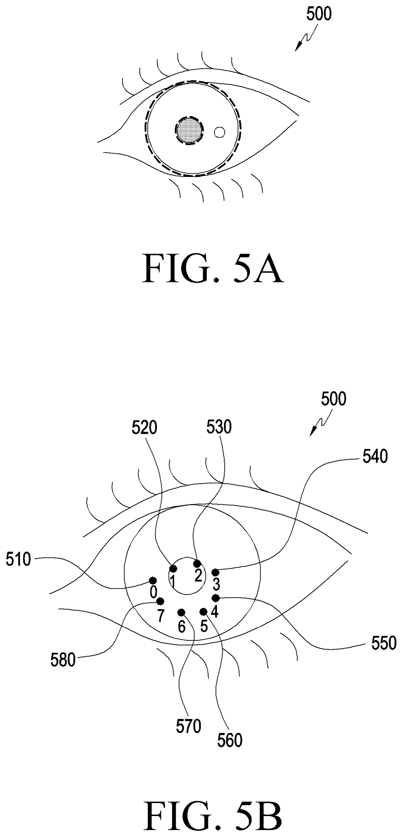

FIG. 5A is an exemplary view illustrating an eyeball image 500 according to an embodiment of the disclosure.

FIG. 5B is an exemplary view illustrating glint identifications (IDs) (e.g., a first glint 510, a second glint 520, a third glint 530, a fourth glint 540, a fifth glint 550, a sixth glint 560, a seventh glint 570, and an eighth glint 580) according to an embodiment of the disclosure.

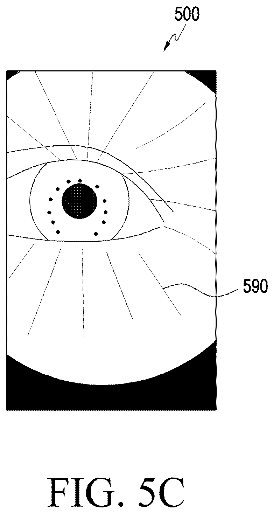

FIG. 5C is an exemplary view illustrating an eyeball image 500 acquired in case that a user is wearing glasses, according to an embodiment of the disclosure.

Referring to FIG. 4, the electronic device (e.g., the processor 120 in FIG. 1) according to an embodiment of the disclosure, in operation 410, may acquire an eyeball image 500 of a user through at least one camera (e.g., the first camera module 251). Referring to FIG. 5A, the eyeball image 500 according to an embodiment of the disclosure may include an iris, a pupil, a cornea, and a glint. According to an embodiment of the disclosure, a glint may mean the reflected light and/or the position of the reflected light that is reflected from the user's eyeball and appears by the light output from a light-emitting module for eye tracking. Referring to FIG. 5B, the glint according to an embodiment of the disclosure may have a unique identification number (e.g., a glint ID) for each glint. The glint ID according to an embodiment of the disclosure may correspond to the ID of the light-emitting module for eye tracking. The electronic device according to an embodiment of the disclosure may perform three-dimensional eye modeling, based on the glint ID. In case of identifying the glint ID, the electronic device according to an embodiment of the disclosure may extract the glint ID using a deep learning method. The electronic device according to an embodiment of the disclosure may identify multiple glints by a deep learning method and then identify a glint ID through the position of each glint and the relative relationship thereof. Referring to FIG. 5C, the eyeball image 500 according to an embodiment of the disclosure may include an optical element 590 in case that the user is wearing glasses. The optical element 590 according to an embodiment of the disclosure may be imaged in different patterns depending on the characteristics of the lens of the glasses worn by the user. Operation 410 according to an embodiment of the disclosure may be performed through various authentication processes in case that it is detected that the electronic device is worn by the user, in case that iris authentication is required, or the like.

Referring back to FIG. 4, the electronic device according to an embodiment of the disclosure, in operation 420, may determine whether a user wearing the electronic device is a legitimate user, based on the eyeball image 500 acquired in operation 410.

In an embodiment, an "legitimate user" may refer to a user who has been registered as a user of the electronic device through prior authentication. The term "legitimate user" according to an embodiment of the disclosure may include a user who is not a false user (e.g., a user wearing an electronic device, who attempts iris authentication using an eyeball image captured by a camera module, instead of his/her own eyes).

The electronic device according to an embodiment of the disclosure may determine whether the user of the electronic device is a legitimate user, based on at least one of position information of glints (e.g., a first glint 510, a second glint 520, a third glint 530, a fourth glint 540, a fifth glint 550, a sixth glint 560, a seventh glint 570, and an eighth glint 580) with respect to the eyeball image, an elliptical shape of a pupil, an elliptical shape of an iris, or whether glasses are worn. In case of false authentication utilizing the output image of an eye tracking (ET) camera, it is highly likely that the image has been captured using a camera different from the eye tracking camera of the electronic device. This may indicate that the elliptical shape of the pupil and/or the elliptical shape of the iris in the eyeball image attempting false authentication may be different from the elliptical shape of the pupil and/or the elliptical shape of the iris in the eyeball image of a user wearing the electronic device. Therefore, the electronic device according to an embodiment of the disclosure may determine whether a user attempting authentication (e.g., iris authentication) is a false user (e.g., whether it is an "eyeball image" rather than a real eye) based on the elliptical shape of the pupil and/or the elliptical shape of the iris. Information about the elliptical shape of the pupil and/or the elliptical shape of the iris according to an embodiment of the disclosure may be stored in the electronic device or in a server connected to the electronic device. The electronic device according to an embodiment of the disclosure may determine whether a user attempting authentication is a legitimate user by comparing the elliptical shape of the pupil and/or the elliptical shape of the iris stored in the electronic device and/or the server with the elliptical shape of the pupil and/or the elliptical shape of the iris acquired by the eye tracking camera (e.g., the first camera 251) of the electronic device.

In addition, in case of a glint, it may be a pattern that cannot appear in case that an eyeball image is captured by a general camera. Accordingly, the electronic device according to an embodiment of the disclosure may determine whether a user attempting authentication is a legitimate user by using the position information of the glint. There may be a case where a user attempting authentication attempts false authentication by using a camera for iris authentication. In this case, the infrared LED pattern used for iris recognition may be different from the infrared LED pattern used for gaze tracking. For example, during gaze tracking, all eight infrared LEDs with IDs 0 to 7 may output light, and during iris recognition, for example, only one or two infrared LEDs (e.g., infrared ID 1 or infrared IDs 1 and 2) may output light. This is to improve the accuracy of the iris recognition algorithm. An electronic device according to an embodiment of the disclosure may know which infrared light-emitting diode (LED) is turned on during the iris authentication, and accordingly, may know the expected glint ID information and position in case of iris authentication. Therefore, in case that a user attempting authentication attempts false authentication, the electronic device may determine whether the user attempting authentication is a legitimate user by comparing the expected glint ID information and position with the glint ID information and position of the eyeball image used in false authentication. The glint ID information and the position information according to an embodiment of the disclosure may be stored in the electronic device or stored in a server connected to the electronic device. The electronic device according to an embodiment of the disclosure may determine whether a user attempting authentication is a legitimate user by comparing glint ID information and position information stored in the electronic device and/or server with glint ID information and position information acquired by the eye tracking camera (e.g., the first camera 251) of the electronic device.

The electronic device according to an embodiment of the disclosure may determine whether a user attempting authentication is a legitimate user by comparing the pattern of the optical element 590 (e.g., by comparing the pattern of the optical element 590 in a false eyeball image with the pattern of the optical element 590 in the eyeball image 500 captured by the first camera module 251). Information about the optical element 590 according to an embodiment of the disclosure may be stored in the electronic device or stored in a server connected to the electronic device. The electronic device according to an embodiment of the disclosure may determine whether a user attempting authentication is a legitimate user by comparing a pattern of the optical element 590 stored in the electronic device and/or the server with a pattern of the optical element 590 acquired by the eye tracking camera (e.g., the first camera 251) of the electronic device.

The electronic device according to an embodiment of the disclosure may identify the gaze direction of a user performing authentication and, when determining whether the user is a false user, use information about the identified gaze direction. The features of the eye (e.g., the elliptical shape of the pupil and/or the elliptical shape of the iris, etc.) according to an embodiment of the disclosure may be stored in the electronic device or stored in a server connected to the electronic device, depending on the gaze direction. The electronic device according to an embodiment of the disclosure may determine whether a user attempting authentication is a legitimate user by comparing information on the characteristics of the eyes (e.g., the elliptical shape of the pupil and/or the elliptical shape of the iris, etc.) and information on the gaze direction stored in the electronic device and/or the server with the characteristics of the eyes (e.g., the elliptical shape of the pupil and/or the elliptical shape of the iris, etc.) and the gaze direction acquired by the eye tracking camera (e.g., the first camera 251) of the electronic device. Operation 420 according to an embodiment of the disclosure may be performed through various authentication processes, in such cases where it is detected that the electronic device has been worn by a user and where iris authentication is required.

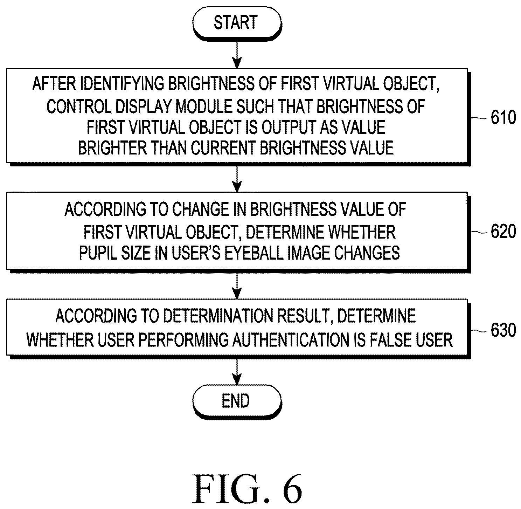

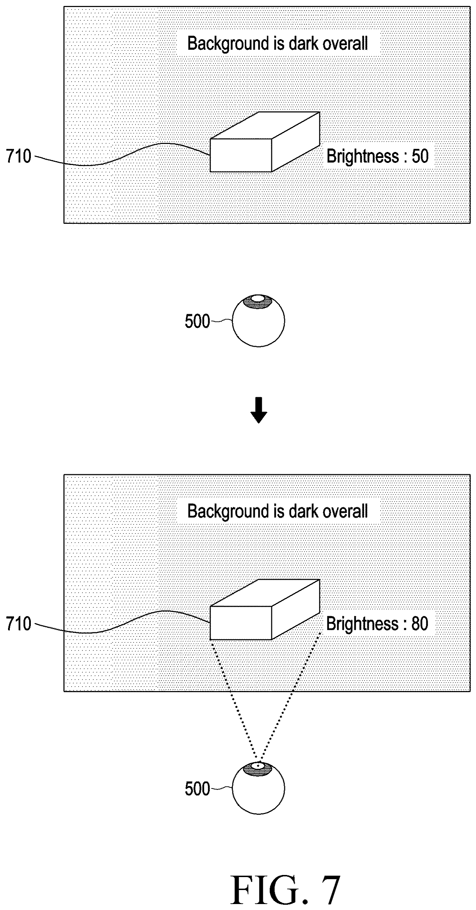

FIG. 6 is an exemplary view illustrating a function or operation for changing the brightness of a first virtual object 710 and/or the brightness of an application execution screen in order for an electronic device (e.g., the electronic device 101 in FIG. 1, the wearable device 200 in FIGS. 2A, 2B, and 2C, or the wearable device 300 in FIG. 3) according to an embodiment of the disclosure to determine whether a user wearing the electronic device is a false user. FIG. 7 is an exemplary view illustrating a function or operation described in FIG. 6 from a user interface perspective.

Referring to FIG. 6 and FIG. 7, the electronic device according to an embodiment of the disclosure, in operation 610, may identify the brightness of a first virtual object 710, and then control a display module (e.g., the display module 160 in FIG. 1) such that the brightness of the first virtual object 710 is output as a value brighter than the current brightness value. The electronic device according to an embodiment of the disclosure may identify the background brightness value by using at least one sensor (e.g., a light sensor), and may not adjust the brightness value of the first virtual object 710 when the background brightness value exceeds a designated brightness value. The first virtual object 710 according to an embodiment of the disclosure may include the first virtual object 710 positioned in the direction to which the user's gaze is directed and/or an execution screen of an application requiring iris authentication. To this end, the electronic device according to an embodiment of the disclosure may further perform a function or operation of identifying the user's gaze direction after operation 610. Operation 610 according to an embodiment of the disclosure may be understood by a person skilled in the art as a function or operation of changing the brightness of only an object positioned in the direction to which the user's gaze is directed, rather than the overall brightness of the screen included in the user's field of view.

The electronic device according to an embodiment of the disclosure, in operation 620, may determine whether the size of the pupil in the user's eyeball image changes as the brightness value of the first virtual object 710 changes. The electronic device according to an embodiment of the disclosure, in operation 630, may determine whether the user who has performed the authentication is a false user, based on the determination result in operation 620. For example, the electronic device according to an embodiment of the disclosure may determine that the user is a legitimate user (e.g., the actual user has worn the electronic device) in case that the size of the pupil changes according to operation 610. On the other hand, in case that the change in the size of the pupil is not detected according to operation 610, the electronic device according to an embodiment of the disclosure may determine that the user who has performed the authentication is not a legitimate user (e.g., determine that the authentication is being performed using the eyeball image). Operations 610 to 630 according to an embodiment of the disclosure may be performed through various authentication processes in such cases where it is detected that the electronic device is worn by a user and where iris authentication is required.

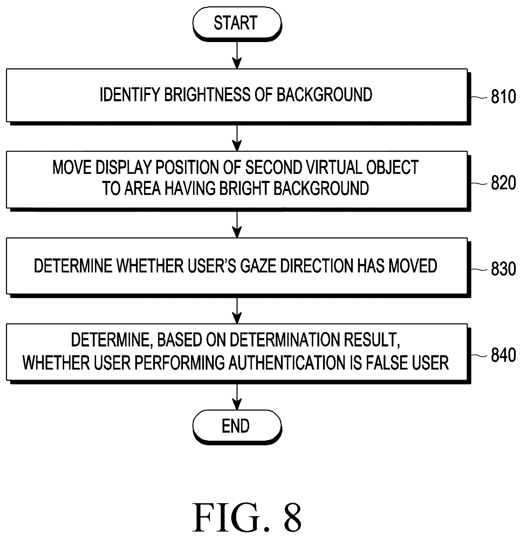

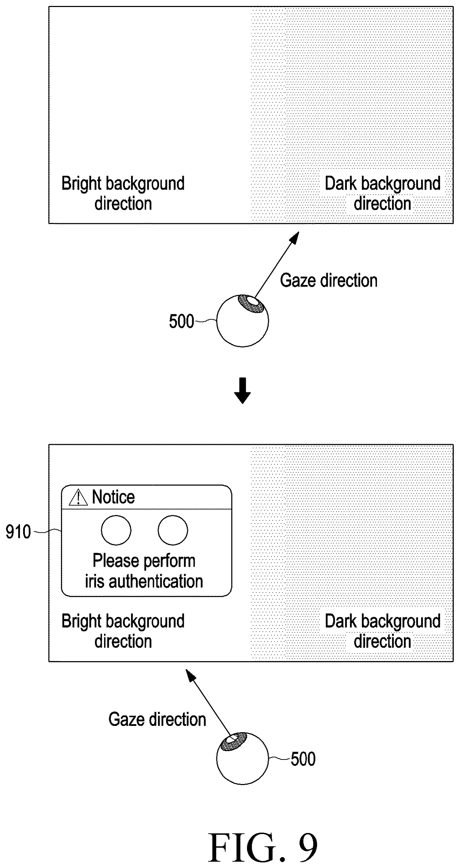

FIG. 8 is an exemplary view illustrating a function or operation of changing a display position of a first virtual object 710 in an electronic device according to an embodiment of the disclosure, in order to determine whether a user wearing the electronic device is a false user. FIG. 9 is an exemplary view illustrating the function or operation described in FIG. 8 from a user interface perspective.

Referring to FIG. 8 and FIG. 9, the electronic device (e.g., the electronic device 101 in FIG. 1, the wearable device 200 in FIG. 2A, FIG. 2B, and FIG. 2C, or the wearable device 300 in FIG. 3) according to an embodiment of the disclosure may identify the brightness of a background in operation 810. The electronic device according to an embodiment of the disclosure may identify the brightness of a background through a function or operation of identifying the brightness of a screen included in the user's field of view, or of detecting the brightness of a real world using a light sensor.

The electronic device according to an embodiment of the disclosure, in operation 820, may move the display position of a second virtual object (e.g., the second virtual object 910 in FIG. 9) (e.g., a retinal authentication screen) to an area having a bright background (e.g., an area including a brightness value equal to or greater than a designated threshold value in a ratio equal to or greater than a designated ratio). The electronic device according to an embodiment of the disclosure, in operation 830, may determine whether the user's gaze direction has moved. The wearable device according to an embodiment of the disclosure, in operation 840, may determine whether the user who has performed the authentication is a false user, based on the determination result in operation 830. For example, in case that the user's gaze (e.g., gaze direction) toward the second virtual object 910 moves as the second virtual object 910 moves, the electronic device may determine that the user who is performing the authentication is a legitimate user (e.g., a real user). For example, in case that the user's gaze does not move toward the second virtual object 910 as the second virtual object 910 moves, the electronic device may determine that the user performing the authentication is a false user.

In an embodiment, the examples described above have been explained in which a determination is made as to whether a user performing authentication is a false user by moving the display position of the iris authentication screen as a second virtual object to an area having a bright background (e.g., an area including a brightness value equal to or greater than a specified threshold value at a specified ratio or more), but is not limited thereto. For example, the electronic device may change the brightness (e.g., increase the brightness) of the iris authentication screen without changing the display position of the iris authentication screen as the second virtual object. The electronic device may identify a user who is performing authentication as a legitimate user, based on the size of the pupil included in the eyeball image changing due to the change in the brightness of the iris authentication screen. The electronic device may identify a user performing authentication as a false user, based on the size of the pupil included in the eyeball image not changing despite the change in the brightness of the iris authentication screen.

The electronic device according to an embodiment of the disclosure may move the display position of the second virtual object 910 (e.g., the iris authentication screen) in a designated direction (e.g., from left to right) in case that the background brightness is substantially uniform, and then perform operation 840. Alternatively, the electronic device according to an embodiment of the disclosure may increase the brightness value of a designated area of the background in case that the brightness of the background is substantially uniform, and then move the second virtual object 910 (e.g., the iris authentication screen) to the area whose brightness has been changed.

Operations 810 to 840 according to an embodiment of the disclosure may be performed through various authentication processes, in such cases where it is detected that the electronic device has been worn by a user and where iris authentication is required.

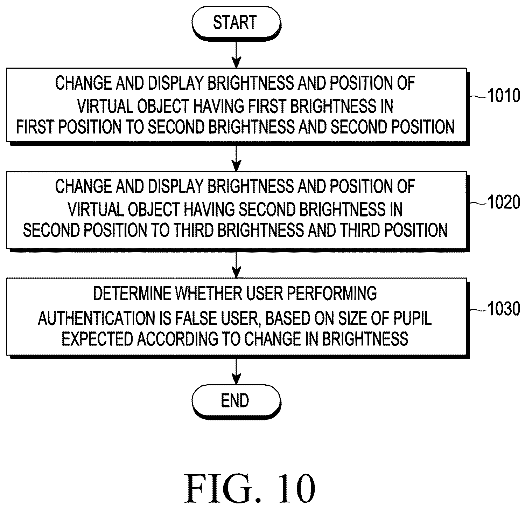

FIG. 10 is an exemplary view illustrating a function or operation of changing the brightness and position of a first virtual object 710 in order to determine whether a user wearing an electronic device is a false user, according to an embodiment of the disclosure.

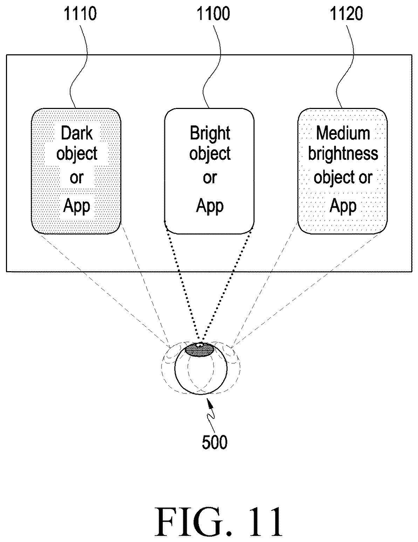

FIG. 11 is an exemplary view illustrating the function or operation described in FIG. 10 from a user interface perspective.

Referring to FIG. 10 and FIG. 11, the electronic device (e.g., the electronic device 101 in FIG. 1, the wearable device 200 in FIGS. 2A, 2B, and 2C, or the wearable device 300 in FIG. 3) according to an embodiment of the disclosure, in operation 1010, may change and display the brightness and position of a virtual object (e.g., the third virtual object 1100) having a first brightness in a first position to a second brightness and a second position. The electronic device according to an embodiment of the disclosure, in operation 1020, may change and display the brightness and position of the virtual object (e.g., the fourth virtual object 1110) having the second brightness in the second position to a third brightness and a third position (e.g., so that a fifth virtual object 1120 is displayed). For example, the electronic device, in operation 1010 and operation 1020, may control the display module such that the brightness and position of the virtual object are changed. The electronic device according to an embodiment of the disclosure, in operation 1030, may determine whether a user performing authentication is a false user, based on the size of the pupil expected according to change in brightness, according to an embodiment. The electronic device according to an embodiment of the disclosure knows the brightness of the virtual object (e.g., the third virtual object 1100, the fourth virtual object 1110, and the fifth virtual object 1120), and thus, the electronic device may know the expected pupil size corresponding to the brightness of the virtual object by deep learning training and/or user history information. Accordingly, the electronic device according to an embodiment of the disclosure may determine whether a user performing authentication is a false user, based on the size of the pupil expected according to change in brightness. In addition, the wearable electronic device may determine whether a user who has performed authentication is a false user by identifying a change in the user's gaze in response to a change in the position of a virtual object (e.g., the third virtual object 1100, the fourth virtual object 1110, or the fifth virtual object 1120), in combination with a change in the size of the pupil. As a result, the accuracy of determining whether a user performing authentication is a false user may be increased. The electronic device according to an embodiment of the disclosure may perform the function or operation shown in FIG. 10 by changing only the brightness without changing the position of the virtual object (e.g., the third virtual object 1100, the fourth virtual object 1110, or the fifth virtual object 1120).

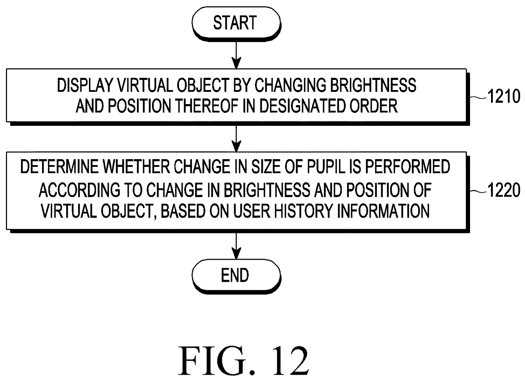

The electronic device according to an embodiment of the disclosure may also determine whether a user who is performing authentication is performing a false authentication, based on user history information. FIG. 12 is an exemplary view illustrating a function or operation of determining whether a user who performs authentication is a false user, based on user history information, in an electronic device according to an embodiment of the disclosure. Referring to FIG. 12, an electronic device (e.g., the electronic device 101 in FIG. 1, the wearable device 200 in FIGS. 2A, 2B, and 2C, or the wearable device 300 in FIG. 3) according to an embodiment of the disclosure, in operation 1210, may display a virtual object (e.g., the third virtual object 1100, the fourth virtual object 1110, or the fifth virtual object 1120) by changing the brightness and position thereof in a designated order. The electronic device according to an embodiment of the disclosure, in operation 1220, may determine whether a change in the size of the pupil is performed according to a change in the brightness and position of the virtual object (e.g., the third virtual object 1100, the fourth virtual object 1110, and the fifth virtual object 1120) based on the user history information. The electronic device according to an embodiment of the disclosure may, in operation 1230, determine whether a user performing the authentication is a false user, based on the determination result in operation 1220. For example, the electronic device according to an embodiment of the disclosure may store a change in the size of the pupil according to the order in which virtual objects (e.g., the third virtual object 1100, the fourth virtual object 1110, and the fifth virtual object 1120) are displayed as user history information, and may determine whether a user who performs authentication is a false user, based on whether a change in the size of the pupil is performed, based on the stored user history information. For example, before performing the operations in FIG. 12, the electronic device may store a change in the size of the pupil as user history information in the memory while the brightness and position of the virtual object change in a designated order. After the user history information is stored in the memory, the electronic device may acquire a change in the size of the pupil while the brightness and position of the virtual object are changed in a designated order. The electronic device may determine that the user who performs the authentication is a legitimate user, based on the acquired change in the size of the pupil corresponding to the change in the size of the pupil stored as the user history information. The electronic device may determine a user who performs the authentication as a false user, based on the obtained change in the size of the pupil not corresponding to the change in the size of the pupil stored as the user history information.

Operations 1010 to 1030 according to an embodiment of the disclosure may be performed through various authentication processes, in such cases where it is detected that the electronic device is worn by a user and where iris authentication is required.

According to an embodiment of the disclosure, the brightness and/or on/off pattern of the light-emitting module for gaze tracking may be adjusted to identify whether a user performing authentication is a false user, based on the size and/or shape change of a glint. According to an embodiment of the disclosure, in case of false authentication, even if the brightness and pattern of the light-emitting module for gaze tracking are adjusted, there is no change in the client's attributes, and thus it is possible to determine whether the user performing the authentication is a false user, based on this.

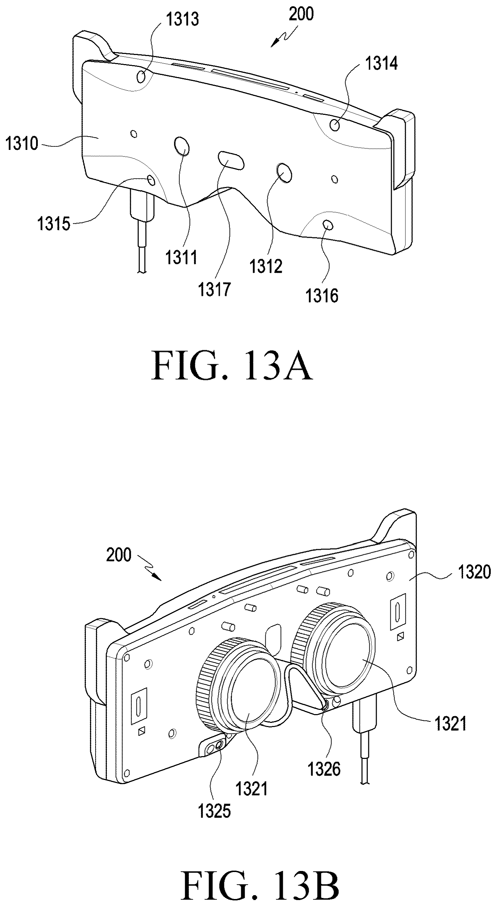

FIGS. 13A and 13B are exemplary views illustrating another type of wearable device 200 according to the disclosure.

Referring to FIG. 13A and FIG. 13B, in an embodiment, a first surface 1310 of the housing may be provided with camera modules 1311, 1312, 1313, 1314, 1315, and 1316 and/or a depth sensor 1317 configured to acquire information related to the surrounding environment of the wearable device 200. In an embodiment, the camera modules 1311 and 1312 may acquire an image related to the environment around the wearable device. In an embodiment, the camera modules 1313, 1314, 1315, and 1316 may acquire an image while the wearable device 200 is worn by a user. The image acquired through the camera modules 1313, 1314, 1315, and 1316 may be used for simultaneous localization and mapping (SLAM), six degrees of freedom (6DoF), three degrees of freedom (3DoF), object recognition, and/or tracking, and may be used as input to the wearable electronic device by recognizing and/or tracking the user's hand. In an embodiment, the depth sensor 1317 may be configured to transfer a signal and receive a signal reflected from a subject, and may be used for identifying the distance to an object, such as in time of flight (TOF). According to an embodiment, face recognition camera modules 1325 and 1326 and/or displays 1321 (and/or a lens) may be disposed on a second surface 1320 of the housing. In an embodiment, the face recognition camera modules 1325 and 1326 adjacent to the display may be used for recognizing a user's face, and may recognize and/or track both eyes of the user. In an embodiment, the displays 1321 (and/or the lenses) may be arranged on the second surface 1320 of the wearable device 200. In an embodiment, the wearable device 200 may not include the camera modules 1315 and 1316 among the multiple camera modules 1313, 1314, 1315, and 1316. Although not shown in FIGS. 13A and 13B, the wearable device 200 may further include at least one of the components shown in FIGS. 2A to 2C. As described above, the wearable device 200 according to an embodiment may have a form factor configured to be worn on the user's head. The wearable device 200 may further include a strap and/or a wearing member (e.g., the wearing member 203) configured to be fixed to a user's body part. The wearable device 200 may provide a user experience based on augmented reality, virtual reality, and/or mixed reality while being worn on the user's head.

An electronic device according to an embodiment of the disclosure may include at least one camera and at least one processor, and the at least one processor may be configured to acquire a user's eyeball image through the at least one camera and determine whether a user wearing the electronic device is a legitimate user based on the acquired eyeball image. Whether the user is a legitimate user may be determined based on at least one of the position information of a glint in the acquired eyeball image, the elliptical shape of a pupil, the elliptical shape of an iris, or whether glasses are worn.

A method for controlling an electronic device according to an embodiment of the disclosure may include the operations of: acquiring an eyeball image of a user through at least one camera; and determining whether a user wearing the electronic device is a legitimate user, based on the acquired eyeball image. Whether the user is a legitimate user may be determined based on at least one of position information of a glint with respect to the eyeball image, the elliptical shape of a pupil, the elliptical shape of an iris, or whether glasses are worn.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 2540) including one or more instructions that are stored in a storage medium (e.g., internal memory 2536 or external memory 2538) that is readable by a machine (e.g., the electronic device 2501). For example, a processor (e.g., the processor 2520) of the machine (e.g., the electronic device 2501) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment of the disclosure, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

## Claims

1. A wearable device, comprising:
at least one camera;
at least one light emitting diode (LED);
at least one processor; and
memory configured to store a plurality of instructions,
wherein the memory is configured to store instructions that, when executed by the at least one processor, cause the wearable device to:
detect that the wearable device is worn by a user,
based on the detection, obtain an eye image of the user wearing the wearable device using light output from the at least one light emitting diode via the at least one camera, and
based on position information of at least one glint, included in the obtained eye image and corresponding to the at least one light emitting diode, determine whether the user is a legitimate user, and
based on the user being the legitimate user, perform an iris authentication for the user.

2. The wearable device of claim 1, wherein the at least one light emitting diode includes a first light emitting diode and a second light emitting diode arranged at different positions in the wearable device,
wherein the eye image includes a first glint formed by light emitted from the first light emitting diode and reflected from an eye of the user while the first light emitting diode is in an ON state and the second light emitting diode is in an OFF state, and a second glint formed by light emitted from the second light emitting diode and reflected from the eye of the user while the first light emitting diode is in an OFF state and the second light emitting diode is in an ON state, and
wherein the plurality of the instructions further include instructions that cause the wearable device to determine whether the user is a legitimate user based on the first glint and the second glint.

3. The wearable device of claim 1 or 2,
wherein the plurality of the instructions further include instructions that cause the wearable device to perform the iris authentication by comparing reference iris information of the user stored in the memory and first iris information of the user included in the eye image.

4. The wearable device of any one of claims 1 to 3,
wherein a position of the at least one glint corresponds to a position of the at least one light emitting diode,
wherein the position of the at least one light emitting diode is arranged in a ring shape.

5. The wearable device of any one of claims 1 to 4,
wherein the at least one light emitting diode is configured to be used for determining whether the user is the legitimate user, for performing the iris authentication, and for tracking a gaze of the user.

6. The wearable device of any one of claims 1 to 5,
wherein the plurality of the instructions further include instructions that cause the wearable device to, when the position information of the glint corresponds to position information of a glint stored in the memory, determine the user as the legitimate user who intends to perform the iris authentication through the eye image of the user obtained in real time rather than a user who intends to perform the iris authentication through a previously captured eye image.

7. The wearable device of any one of claims 1 to 6,
wherein the at least one camera includes an infrared camera, and
the at least one camera is configured to be used for tracking a gaze of the user and for determining whether the user is the legitimate user.

8. A non-transitory computer-readable recording medium configured to store a plurality of instructions which, when executed by at least one processor of a wearable device, cause the wearable device to:
detect a user's wearing of the wearable device;
based on the detection, acquire an eyeball image of the user wearing the wearable device by using light output from at least one light-emitting diode of the wearable device, through at least one camera of the wearable device;
determine whether the user is a legitimate user, based on position information of at least one glint corresponding to the at least one light-emitting diode and comprised in the acquired eyeball image; and
store instructions for performing an iris authentication for the user, based on the user being a legitimate user.

9. The non-transitory recording medium of claim 8, wherein the at least one light-emitting diode may comprise a first light-emitting diode and a second light-emitting diode arranged at different positions within the wearable device,
wherein the eyeball image comprises a first glint formed by light reflected from an eye of the user after being emitted from the first light-emitting diode in a state where the first light-emitting diode is ON and the second light-emitting diode is OFF, and a second glint formed by light reflected from the eye of the user after being emitted from the second light-emitting diode in a state where the first light-emitting diode is OFF and the second light-emitting diode is ON, and
wherein the plurality of the instructions further comprises instructions causing the wearable device to determine whether the user is a legitimate user based on the first glint and the second glint.

10. The non-transitory recording medium of claim 8 or 9, wherein the plurality of the instructions further comprises instructions that cause the wearable device to perform the iris authentication by comparing reference iris information of the user stored in the memory and first iris information of the user comprised in the eyeball image.

11. The non-transitory recording medium of any one of claims 8 to 10, wherein a position of the at least one glint corresponds to a position of the at least one light-emitting diode, and
wherein the position of the at least one light-emitting diode is disposed in a ring shape.

12. The non-transitory recording medium of any one of claims 8 to 11, wherein the at least one light-emitting diode is configured to be used for determining whether the user is the legitimate user, for performing the iris authentication, and for tracking the user's gaze.

13. The non-transitory recording medium of any one of claims 8 to 12, wherein the plurality of the instructions further comprises instructions that cause the wearable device to, in case that the position information of the glint corresponds to position information of a glint stored in the memory, determine the user as the legitimate user who intends to perform the iris authentication through the eyeball image of the user obtained in real time rather than a user who intends to perform the iris authentication through a previously captured eyeball image.

14. The non-transitory recording medium of any one of claims 8 to 13, wherein the at least one camera comprises an infrared camera, and
wherein all of the at least one camera is configured to be used for tracking the user's gaze and for determining whether the user is the legitimate user.
